(19) Europäisches Patentamt
European Patent Office
Office européen des brevets

(11) EP 0 545 168 B1

(12) **EUROPÄISCHE PATENTSCHRIFT**

(45) Veröffentlichungstag und Bekanntmachung des Hinweises auf die Patenterteilung:
**24.04.1996 Patentblatt 1996/17**

(51) Int Cl.[6]: **C08F 20/54**, C08F 246/00, C07B 57/00

(21) Anmeldenummer: **92119774.5**

(22) Anmeldetag: **20.11.1992**

(54) **Füllstoffhaltige, optisch aktive Perlpolymerisate**

Optically active polymer beads containing a filler

Polymères optiquement actifs en forme de perles contenant une charge

(84) Benannte Vertragsstaaten:
**AT BE CH DE DK ES FR GB GR IT LI LU MC NL PT SE**

(30) Priorität: **03.12.1991 DE 4139747**

(43) Veröffentlichungstag der Anmeldung:
**09.06.1993 Patentblatt 1993/23**

(73) Patentinhaber: **BAYER AG**
**D-51368 Leverkusen (DE)**

(72) Erfinder:
- **Podszun, Wolfgang, Dr.**
  **W-5000 Köln 80 (DE)**
- **Bömer, Bruno, Dr.**
  **W-5060 Bergisch Gladbach 2 (DE)**
- **Grosser, Rolf, Dr.**
  **W-5090 Leverkusen 1 (DE)**
- **Lange, Walter, Dr.**
  **W-5000 Köln 60 (DE)**
- **Grosse-Bley, Michael, Dr.**
  **W-5000 Köln 80 (DE)**

(56) Entgegenhaltungen:
**EP-A- 0 084 769** **EP-A- 0 249 078**
**EP-A- 0 379 917**

- **CHEMICAL ABSTRACTS, vol. 83, no. 4, 28. Juli 1975, Columbus, Ohio, US; abstract no. 28896j, BLASCHKE ET AL. 'Chromatographic resolutions of racemates. IV. Separation efficiency of optically active poly(N--((S)--1--phenylethyl)acrylamide) depending on the polymerization procedure.' Seite 23; Spalte 2;**

EP 0 545 168 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft füllstoffhaltige, druckstabile, optisch aktive Perlpolymerisate und ihre Verwendung als Adsorbentien für die chromatographische Trennung von Enantiomerengemischen (bzw. Racematen) in ihre Enantiomere.

In den letzten Jahren gewinnt die Trennung von Wirkstoff-Racematen zunehmend an Bedeutung, weil sich gezeigt hat, daß die Enantiomere eines chiralen Wirkstoffs sich häufig in ihren Wirkungen und Nebenwirkungen unterscheiden.

Neben den klassischen Verfahren zur Racematspaltung hat sich in letzter Zeit die chromatographische Racemattrennung besonders bewährt. Außer den Naturstoffderivaten, z.B. auf Zellulose-Basis, sind vermehrt synthetische, optisch aktive, polymere (Meth)acrylamide als Adsorbentien eingesetzt worden (vgl. Blaschke, Chromatogr. Sci. 1988, 40, 179 bis 198).

Polymerisate auf Basis optisch aktiver (Meth)acrylsäure-Derivate, die als Adsorbentien für die Trennung von Racematen gut geeignet sind, werden z.B. in der EP-A-0 379 917 beschrieben.

Vemetzte, quellbare Perlpolymerisate sind als stationäre Phase für die präparative säulenchromatographische Trennung von Racematen besonders effektiv.

Die bisher bekannten Adsorbentien in Perlform haben jedoch nur eine begrenzte mechanische Stabilität. Insbesondere ist ihre Stabilität gegenüber Druckbelastung im gequollenen Zustand unbefriedigend. Dieser Mangel an Druckfestigkeit führt bei der praktischen Anwendung dazu, daß bei hohen Durchflußgeschwindigkeiten (zur Erzielung einer hohen Raum-Zeit-Ausbeute), infolge der Deformation der Perlpolymerisate die Säulen schließlich verstopfen können. Die Limitierung der maximalen Durchflußgeschwindigkeit bei der Chromatographie an herkömmlichen gequollenen Perlpolymerisaten schränkt die technische Anwendung dieser Methode ein und bringt ökonomische Nachteile mit sich.

Die Aufgabe der vorliegenden Erfindung ist die Bereitstellung von optisch aktiven Perlpolymerisaten mit guten Trenneigenschaften und mit verbesserten mechanischen Eigenschaften, insbesondere mit einer verbesserten Druckfestigkeit.

Diese Aufgabe wird gelöst durch optisch aktive vernetzte Perlpolymerisate mit einem mittleren Teilchendurchmesser von 1-800 µm, die dadurch gekennzeichnet sind, daß sie einen Anteil von 2 bis 60 Gew.-%, vorzugsweise 5 bis 30 Gew.-% anorganischen Füllstoffes mit einer spezifischen Oberfläche von 30-500 $m^2/g$ enthalten.

Es war in hohem Maße überraschend, daß die erfindungsgemäßen Perlpolymerisate neben entscheidend verbesserten mechanischen Eigenschaften, insbesondere der Druckstabilität, trotz des Einbaus von Füllstoffen ein gutes Quellvermögen und hervorragende Trenneigenschaften aufweisen.

Der mittlere Teilchendurchmesser der erfindungsgemäßen, optisch aktiven Perlpolymerisate beträgt vorzugsweise 5 bis 400 µm, besonders bevorzugt 10 bis 200 µm.

Als anorganischer Füllstoff sind unlösliche, feinteilige, kristalline oder amorphe anorganische Verbindungen mit einer mittleren Teilchengröße von 3 nm bis 10 µm, vorzugsweise 10 nm bis 5 µm geeignet.

Beispiele für erfindungsgemäß geeignete Füllstoffe sind Hydroxide, Oxide, Carbonate, Sulfate und Phosphate von Metallen, wie Aluminiumhydroxid, Aluminiumoxid, Aluminiumoxidhydrat, Titandioxid, Zirkondioxid, Calciumcarbonat, Dolomit, Calciumsulfat, Bariumsulfat, Calciumphosphat und Zirkonphosphat. Bevorzugt sind silikatische Füllstoffe wie beispielsweise Kaolin, calciniertes Kaolin, Glimmer, Wollastonit, Calciumsilikat, Aluminiumsilikat, Natriumaluminiumsilikat, Zirkonsilikat, Quarzmehl und amorphes Siliciumdioxid, desweiteren fein gemahlene Gläser und Glaskeramiken. Besonders bevorzugt ist flammhydrolytisch gewonnenes, mikrofeines Siliciumdioxid, das z.B. unter der Bezeichnung Aerosil oder HDK (Hochdisperse Kieselsäure) als Handelsprodukt erhältlich ist.

Die Größe der spezifischen Oberfläche des anorganischen Füllstoffs ist von Wichtigkeit für die Qualität und die Trenneigenschaften der erfindungsgemäßen Perlpolymerisate. Die spezifische Oberfläche soll 30 bis 500 $m^2/g$, vorzugsweise 50 bis 400 $m^2/g$, gemessen nach der BET-Methode (Gasadsorption) betragen.

Die anorganischen Füllstoffe gelangen vorzugsweise in mit Haftvermittlern behandelter Form zum Einsatz. Als Haftvermittler eignen sich beispielsweise Silan- und Titanverbindungen, wie Trimethylchlorsilan, Hexamethylendisiloxan, 3-Aminopropyltrimethoxysilan, Butyltitanat und Isopropyltitanat. Besonders bevorzugt sind Haftvermittler mit polymerisierbaren Gruppen wie Vinyltrimethoxysilan, Vinyltriethoxysilan, Vinylethyldiethoxysilan, Allyltriethoxysilan, γ-Methacryloxypropyltrimethoxysilan, γ-Methacryloxypropyltriethoxysilan, γ-Acryloxypropyltrimethoxysilan, γ-Acryloxypropyltriethoxysilan, γ-Methacryloxypropylmethyldiethoxysilan.

Bei der Herstellung der erfindungsgemäßen Perlpolymerisate werden bevorzugt polymerisierbare Derivate von optisch aktiven Aminen oder Aminoalkoholen mit bis zu 20 C-Atomen bzw. von Aminosäureestern und Aminosäureamiden, die sich von Aininosäuren mit bis zu 15 C-Atomen ableiten und deren Ester- bzw. Amid-Reste bis zu 20 C-Atome aufweisen, eingesetzt.

Bevorzugt genannt seien polymerisierbare Monomere der allgemeinen Formel (II)

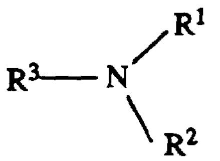

(II),

in welcher

$R^1$ und $R^2$ gleich oder verschieden sind und jeweils für Wasserstoff, $C_1$-$C_{10}$-Alkyl, $C_3$-$C_{12}$-Cycloalkyl, $C_6$-$C_{14}$-Aryl, $C_4$-$C_5$-Heteroaryl mit 1 bis 2 gleichen oder verschiedenen Heteroatomen aus der Gruppe Stickstoff, Sauerstoff oder Schwefel oder für Aralkyl mit bis zu 12 C-Atomen stehen, wobei die Reste gegebenenfalls ein- bis dreifach durch Alkyl, Alkoxy mit jeweils 1 bis 4 C-Atomen, Hydroxy, Halogen, Trifluormethyl oder Trifluormethoxy substituiert sind und

$R^3$ für einen polymerisierbaren Rest steht.

Von besonderem Interesse sind Verbindungen der allgemeinen Formel (II), in welcher $R^3$ für einen olefinisch ungesättigten Rest steht wie z.B. für einen Rest aus der Gruppe Acryloyl, Methacryloyl, Fluoracryloyl, Vinylbenzoyl oder Propenylbenzoyl.

Ebenfalls besonders geeignet sind Verbindungen der allgemeinen Formel (II) aus der Gruppe der optisch aktiven, natürlich vorkommenden Aminosäuren und deren Ester und Amide.

Ganz besonders bevorzugte optisch aktive Verbindungen der Formel (II) sind Menthyl(meth)-acrylamid, 1-Cyclohexylethyl-(meth)acrylamid, 1-Phenylethyl-(meth)acrylamid, N-(Meth)acryloyl-phenylalaninethylester, N-(Meth)acryloyl-phenylalanindiethylamid, 2-(Methyl)ethenyl-4-methyl-5-phenyl-2-oxazolin, N-(Meth)acryloyl-valin-t-butylester, N-(Meth)acryloyl-leucin-t-butylester, N-(Meth)acryloyl-phenylalanin-t-butylester, N-(Meth)acryloyl-alanin-menthylester, N-(Meth)acryloyl-phenylalanin-menthylester, N-Fluoracryloyl-alanin-bornylester, N-Fluoracryloyl-alanin-fenchylester, N-(Meth)acryloyl-alanin-menthylamid, N-(Meth)acryloyl-methionin-1-phenylethylamid, N-(Meth)acryloyl-leucin-menthylamid, N-(Meth)acryloyl-isoleucin-menthylamid, N-Methacryloyl-leucin-anilid, N-(Meth)acryloylamino-penicillansäurebenzylestersulfoxid, N-(Meth)acryloyl-phenylglycin-propylamid.

Sehr gut geeignet sind auch die in den Patentschriften EP-249 078, EP-281 234, EP-0 379 917, DE-OS 2 500 323 und DE-OS 3 930 344 offenbarten polymerisierbaren Verbindungen.

Die erfindungsgemäßen, optisch aktiven, druckstabilen Perlpolymerisate enthalten 30 bis 95 Gew.-%, vorzugsweise 50 bis 90 Gew.-% (bezogen auf das Gewicht der Perlpolymerisate) Polymeranteil aus gleichen oder verschiedenen polymerisierbaren Verbindungen der Formel (II), 2 bis 60 Gew.-%, vorzugsweise 4 bis 30 Gew.-% anorganischen Füllstoff und 3 bis 25 Gew.-%, vorzugsweise 6 bis 20 Gew.-% eines Vernetzungsmittels.

Die erfindungsgemäßen, optisch aktiven, vernetzten Perlpolymerisate werden nach üblichen Methoden hergestellt, z.B. indem man

a) den gegebenenfalls mit Haftvermittlern behandelten anorganischen Füllstoff in einem Gemisch aus optisch aktiven, polymerisierbaren Verbindungen der Formel (II), einem Vernetzungsmittel und einem Verdünnungsmittel unter Anwendung hoher Scherkräfte suspendiert,

b) die erhaltene Mischung mit einem Radikalbildner aktiviert und in einem wäßrigen Medium unter Verwendung eines Schutzkolloids dispergiert und anschließend

c) die erhaltene Dispersion durch Erhitzen auf die Zerfallstemperatur des Radikalbildners polymerisiert.

Als Vernetzungsmittel kommen bevorzugt Verbindungen in Frage, die mindestens zwei polymerisierbare Gruppen enthalten, bevorzugt zwei Vinylgruppen. Bevorzugte Vernetzungsmittel sind Alkandioldiacrylate wie 1,6-Hexandioldiacrylat, 1,4-Butandioldiacrylat, 1,3-Propandioldiacrylat oder 1,2-Ethylenglykoldiacrylat oder Alkandioldimethacrylate wie 1,4-, 1,3- oder 2,3-Butandioldimethacrylat, 1,3-Propandioldimethacrylat oder 1,2-Ethylenglykoldimethacrylat, aromatische Divinylverbindungen wie beispielsweise Divinylbenzol, Divinylchlorbenzol, Divinyltoluol, Dicarbonsäureester wie Adipinsäuredivinylester, Benzoldicarbonsäuredivinylester, Terephthalsäuredivinylester, N,N'-Alkylendiacrylamide wie N,N'-Methylendiacrylamid, N,N'-Ethylendiacrylamid, N,N'-Methylendimethacrylamid, N,N'-Ethylendimethacrylamid, N,N'-Dimethyl-ethylendiacrylamid oder Piperazindiacrylamid. Weitere geeignete Vernetzungsmittel sind multifunktionelle Vernetzer wie Trimethylolpropantriacrylat, Trimethylolpropantrimethacrylat, Pentaerythrittriacrylat, Pentaerythrittetraacrylat, Pentaerythrittrimethacrylat oder Pentaerythrittetramethacrylat oder N,N',N''-Tris-acryloyl-perhydrotriazin.

Das Vernetzungsmittel wird in Mengen von 0,5 bis 50 Mol-%, vorzugsweise 1 bis 30 Mol-%, besonders bevorzugt 3 bis 20 Mol-% (bezogen auf die Summe aus den optisch aktiven Verbindungen der Formel (II) und dem Vernetzungsmittel) eingesetzt. Dies entspricht einer Menge von 3 bis 25 Gew.-%, bezogen auf das Gewicht des Perlpolymerisats.

Durch Art und Menge des Vernetzungsmittels läßt sich der Quellungsgrad (Q) der erfindungsgemäßen Perlpolymerisate nach üblichen Methoden einstellen.

Bei der praktischen Anwendung haben sich Perlpolymerisate mit einem Quellungsgrad von 1.1 bis 12.0, bevorzugt von 1.5 bis 8.0, insbesondere von 2.0 bis 6.0, bewährt.

Der Quellungsgrad Q ist wie folgt definiert:

$$Q = \frac{\text{Volumen des gequollenen Perlpolymerisates}}{\text{Volumen des ungequollenen Perlpolymerisates}}$$

Als Verdünnungsmittel sind mit Wasser nicht mischbare, inerte organische Flüssigkeiten geeignet. Bevorzugt genannt seien aliphatische oder aromatische Kohlenwasserstoffe mit bis zu 20 C-Atomen wie Hexan, Heptan, Isodecan, Benzol oder Toluol, Halogenkohlenwasserstoffe wie Di-, Tri-, Tetrachlormethan oder 1,2-Dichlorethan, Ester wie Essigsäuremethylester, Essigsäurebutylester oder Dialkylcarbonate und nicht wasserlösliche Ketone wie Methylisobutylketon oder Cyclohexanon.

Das Gewichtsverhältnis von Verdünnungsmittel zu den optisch aktiven, polymerisierbaren Verbindungen (II) beträgt 0.5:1 bis 30:1, vorzugsweise 1,5:1 bis 10:1.

Als Radikalbildner in der Stufe b) kommen die üblichen Radikalbildner in Frage. Bevorzugt sind Peroxide wie beispielsweise Dibenzoylperoxid, Dilaurylperoxid oder Di-orthotolylperoxid, Perester wie tert.-Butylperpivalat oder tert.-Butylperoctanoat, oder Azoverbindungen wie beispielsweise Azobisisobuttesäurenitril (AIBN). Auch Gemische verschiedener Radikalbildner sind verwendbar.

Als Schutzkolloide sind natürliche und synthetische, wasserlösliche, hochmolekulare Substanzen geeignet. Bevorzugt werden synthetische Polymerisate, wie Polyvinylalkohol und teilverseifte Polyvinylacetate, desweiteren Polyvinylpyrrolidon und Copolymerisate aus (Meth)acrylsäure und (Meth)acrylsäurealkylestern, deren Säuregruppen ganz oder teilweise mit Ammoniak oder Alkalihydroxid neutralisiert sind.

Bei der Polymerisation in der Stufe c) wird ein Verhältnis von Wasserphase zur organischen Phase von 20:1 bis 1:1, vorzugsweise 10:1 bis 2:1, eingehalten. Es wird vorzugsweise unter Inertgasatmosphäre, beispielsweise unter Stickstoff oder Argon polymerisiert. Die Polymerisationstemperatur beträgt 30 bis 100°C, bevorzugt 40 bis 80°C. In vielen Fällen ist es vorteilhaft, bei der Siedetemperatur des Verdünnungsmittels zu arbeiten. Die Polymerisationsdauer beträgt zwischen 1 und 24 Stunden, bevorzugt zwischen 3 und 12 Stunden.

Das erfindungsgemäße Perlpolymerisat kann nach erfolgter Polymerisation auf üblichem Wege, beispielsweise durch Filtration oder Sedimentation der flüssigen Phase abgetrennt werden. Das Perlpolymerisat wird zur Reinigung gründlich mit Wasser und mit inerten organischen Lösungsmitteln wie Methanol, Ethanol, Toluol, Dichlormethan, Trichlormethan oder Aceton gewaschen und anschließend getrocknet.

Die Verwendung der erfindungsgemäßen, optisch aktiven Perlpolymerisate zur chromatographischen Trennung von racemischen Gemischen in ihre Enantiomere ist ebenfalls Gegenstand der vorliegenden Erfindung.

Die Fähigkeit der Polymerisate zur Racemattrennung wird durch die Kapazitätsverhältnisse ($k'_{1(2)}$-Werte) für die beiden Enantiomere (1) und (2) und den daraus resultierenden Enantioelektivitätswert a ausgedrückt. Diese chromatographischen Parameter sind wie folgt definiert:

$$\text{Kapazitätsverhältnis } K'_{1(2)} = \frac{t_{1\,(2)} - t_o}{t_o}$$

$$\text{Enantioselektivität } \alpha = \frac{k'_2}{k'_1}$$

$t_o$ = Totzeit der Säule,

$t_{1(2)}$ = Retentionszeit des zuerst eluierten Enantiomers 1 bzw. des später eluierten Enantiomers 2.

Die präparative Trennung von racemischen Gemischen in ihre optischen Antipoden unter Verwendung der erfindungsgemäßen Polymerisate wird vorzugsweise säulenchromatographisch vorgenommen. Besonders vorteilhaft ist es hierfür, die chromatographische Trennung mit Perlpolymerisaten einer bestimmten Korngrößenverteilung vorzunehmen; gute Trennleistungen werden mit Perlpolymerisaten einer Korngrößenverteilung von 5 bis 200 µm, bevorzugt 15 bis 100 µm erhalten.

Die Arbeitsmethodik der säulenchromatographischen Trennung ist bekannt. Üblicherweise wird das Polymerisat in Fließmittel suspendiert und die Suspension in eine Glassäule gefüllt. Nach Ablaufen des Fließmittels wird das zu trennende Racemat, gelöst im Fließmittel, auf die Säule aufgebracht. Dann wird mit Fließmittel eluiert und die Enantiomeren

im Eluat photometrisch und/oder polarimetrisch mittels geeigneter Durchflußzellen detektiert.

Als Fließmittel werden üblicherweise organische Lösungsmittel bzw. Lösungsmittelgemische verwendet, die das als Adsorbens eingesetzte Polymerisat anquellen und das zu trennende Racemat lösen. Beispielsweise seien genannt: Kohlenwasserstoffe wie Benzol, Toluol oder Xylol, Ether wie Diethylether, tert.-Butylmethylether, Dioxan oder Tetrahydrofüran, Halogenkohlenwasserstoffe wie Di- oder Trichlormethan, Aceton, Acetonitril oder Essigester, Alkohole wie Methanol, Ethanol, n-Propanol, Isopropanol oder n-Butanol, oder aber Gemische der genannten Lösungsmittel. Als besonders geeignet haben sich Mischungen aus Toluol mit Tetrahydrofuran, Dioxan oder Isopropanol erwiesen.

## Beispiele

### Beispiel 1

Herstellung eines füllstoffhaltigen Perlpolymerisats aus N-Acryloyl-L-phenylalanin-d-menthylester

13,8 g N-Acryloyl-L-phenylalanin-d-menthylester und 1,2 g Ethylenglykoldimethacrylat werden in 37,5 g Trichlormethan gelöst. In diese Lösung werden unter Verwendung eines Schnellrührers 1,7 g mikrofeines Siliciumdioxid (BET-Oberfläche 130 $m^2$/g, behandelt mit 5 % $\gamma$-Methacryloxypropyltrimethoxysilan) eingearbeitet. Nach Zugabe von 0,3 g Azobisisobutyronitril wird die erhaltene Mischung unter Rühren mit 450 rpm in einer Lösung von 5 g Polyvinylalkohol (Verseifungsgrad: 88 %) in 100 ml Wasser dispergiert. Die Apparatur wird mehrmals evakuiert und mit Stickstoff gefüllt Anschließend wird 10 Stunden bei 55°C unter Stickstoff polymerisiert. Der Reaktionsansatz wird dann mit 2 l Wasser verdünnt und die flüssige Phase nach dem Absitzen des Perlpolymerisates abdekantiert. Das Perlpolymerisat wird durch 4-maliges Aufschlämmen in Wasser und Abdekantieren vom Feinkorn (Partikel mit einer Teilchengröße <5 µm) befreit und nach intensivem Waschen mit Aceton bei 60°C getrocknet.

| | |
|---|---|
| Ausbeute: | 12,6 g |
| mittlere Teilchengröße: | 25 µm |
| Schüttgewicht: | 2,1 ml/g |
| Quellungsgrad: | 2,57 |

### Beispiel 2

Herstellung eines füllstoffhaltigen Perlpolymerisats aus N-Methacryloyl-L-leucin-t-butylester

Beispiel 1 wurde wiederholt, wobei eine Lösung von 13,7 g N-Methacryloyl-L-leucin-t-butylester und 1,3 g Ethylenglykoldimethacrylat in 37,5 g Trichlormethan eingesetzt wurde.

| | |
|---|---|
| Ausbeute: | 14,6g |
| mittlere Teilchengröße: | 40 µm |
| Schüttgewicht: | 2,1 ml/g |
| Quellungsgrad: | 2,43 |

### Beispiel 3

Herstellung eines füllstoffhaltigen Perlpolymerisats aus N-Methacryloyl-L-methionin-1-menthylamid

Beispiel 1 wurde wiederholt, wobei eine Lösung von 13,7 g N-Methacryloyl-L-methionin-1-menthylamid und 1,3 g Ethylenglykoldimethacrylatg in 37,5 g Trichlormethan eingesetzt wurde.

| | |
|---|---|
| Ausbeute: | 15,1g |
| mittlere Teilchengröße: | 36 µm |
| Schüttgewicht: | 1,85 ml/g |
| Quellungsgrad: | 2,00 |

Vergleichsbeispiel A (ohne Füllstoff)

Herstellung eines Perlpolymerisats aus N-Acryloyl-L-phenylalanin-d-menthylester ohne Füllstoff

Beispiel 1 wurde wiederholt, wobei jedoch kein Siliciumdioxid eingesetzt wurde.

| | |
|---|---|
| Ausbeute: | 11,1g |
| mittlere Teilchengröße: | 28 µm |
| Schüttgewicht: | 1,8 ml/g |
| Quellungsgrad: | 2,33 |

Beispiel 4

Das Beispiel 1 wurde wiederholt, wobei 0,8 g des gleichen mikrofeinen Silicumdioxids und eine Lösung von 13,0 g N-Acryloyl-L-phenylalanin-d-menthylester und 2,0 g Ethylenglykoldimethacrylat in 37,5 g Trichlormethan eingesetzt wurden.

| | |
|---|---|
| Ausbeute: | 11,1g |
| mittlere Teilchengröße: | 30 µm |
| Schüttgewicht: | 1,6 ml/g |
| Quellungsgrad: | 2,31 |

Beispiel 5

Das Beispiel 1 wurde wiederholt, wobei 3,75 g des gleichen mikrofeinen Siliciumdioxids und eine Lösung von 13,6 g N-Acryloyl-L-phenylalanin-d-menthylester und 1,4 g Ethylenglykoldimethacrylat in 37,5 g Trichlormethan eingesetzt wurden.

| | |
|---|---|
| Ausbeute: | 12,6 g |
| mittlere Teilchengröße: | 60 µm |
| Schüttgewicht: | 1,7 ml/g |
| Quellungsgrad: | 2,12 |

Anwendungsbeispiel:

Für die chromatographischen Trennungen wurden folgende Testracemate verwendet:

Racemat Nr. 1: 3-(4-Chlorphenylsulfonamido)-9-(2-carboxyethyl)-1,2,3,4-tetrahydrocarbazol

Racemat Nr. 2: 3,5-Dinitrobenzoylleucin

Die Perlpolymerisate wurden in einer Glassäule (Innendurchmesser 1,2 cm; Betthöhe der Packung 30-32 cm) eingesetzt. Eluiert wurde mit Toluol-Tetrahydrofuran-Gemischen (Elutionsmittel a Toluol/THF 1:1; Elutionsmittel b Toluol/THF 2:1; Elutionsmittel c Toluol/THF 3:1); die Fließmittelgeschwindigkeiten betrugen jeweils 0,5 ml/min.

Die bei der chromatographischen Trennung der Testracemate mit Hilfe der erfindungsgemäßen, füllstoffhaltigen, optisch aktiven Perlpolymerisate sowie mit dem Polymerisat aus Vergleichsbeispiel A erhaltenen Ergebnisse und die verwendeten Elutionsmittel sind in der Tabelle 1 zusammengestellt.

Die Druckfestigkeitsprüfungen wurden im Anschluß an die Trennversuche - nach Entfernen des Detektors - durchgeführt. Mit 0,5 ml/min beginnend, wurde der Fluß nach jeweils 30 min um 0,5 ml/min erhöht, bis der Druckabfall über der Säule 8 bar betrug. Der bei diesem Enddruck ermittelte maximale Fluß ist ebenfalls in der Tabelle angegeben.

Tabelle 1

(Trennergebnisse)

| Adsorbens gemäß Bsp. | Testracemat | Enantioselektivität $\alpha$ | Kapazitätsverhältnis | Elutionsmittel | maximaler Fluß (ml/min) |
|---|---|---|---|---|---|
| 1 | 1 | 1,83 | 0,59 | b | 8,5 |
| 2 | 1 | 1,69 | 1,91 | a | >10 |
| 3 | 2 | 1,83 | 0,70 | c | >10 |
| 4 | 1 | 1,91 | 0,57 | b | 10 |
| 5 | 1 | 1,85 | 0,55 | b | >10 |
| A | 1 | 1,75 | 0,49 | b | 2,0 |

## Patentansprüche

1. Optische aktive vernetzte Perlpolymerisate mit einem mittleren Teilchendurchmesser von 1 - 800 Mikrometer, dadurch gekennzeichnet, daß sie einen Anteil von 2 - 60 Gewichtsprozent anorganischen Füllstoffes mit einer spezifischen Oberfläche von 30 - 500 $m^2/g$ enthalten.

2. Optisch aktive vernetzte Perlpolymerisate gemäß Anspruch 1, die einen Anteil von 5 bis 30 Gew.-% anorganischen Füllstoff enthalten.

3. Perlpolymerisate gemäß Anspruch 1, dadurch gekennzeichnet, daß sie als anorganische Füllstoffe unlösliche kristalline oder amorphe anorganische Verbindungen mit einer mittleren Teilchengröße von 3 nm bis 10 µm enthalten.

4. Perlpolymerisate gemäß Ansprüchen 1 bis 3, dadurch gekennzeichnet, daß der anorganische Füllstoff aus Hydroxiden, Oxiden, Carbonaten, Sulfaten, Phosphaten oder Silikaten von Metallen, Siliciumdioxiden oder feingemahlenen Gläsern und Glaskeramiken besteht.

5. Perlpolymerisate gemäß Ansprüchen 1 bis 4, dadurch gekennzeichnet, daß sie anorganische Füllstoffe enthalten, die mit Haftvermittlern aus der Gruppe Silan- und/oder Titanverbindungen behandelt wurden.

6. Perlpolymerisate gemäß Ansprüchen 1 bis 5, dadurch gekennzeichnet, daß sie polymerisierbare Derivate von optisch aktiven Arninen, Aminoalkoholen, Aminosäureestem oder Aminosäureamiden enthalten.

7. Perlpolymerisate gemäß Ansprüchen 1 bis 6, dadurch gekennzeichnet, daß sie 30 bis 95 Gew.-% (bezogen auf das Gewicht der Perlpolymerisate) Polymeranteil aus gleichen oder verschiedenen polymerisierbaren Verbindungen enthalten.

8. Verfahren zur Herstellung von optisch aktiven vernetzten Perlpolymerisaten gemäß Anspruch 1, dadurch gekennzeichnet, daß man den gegebenenfalls mit Haftvermittlern behandelten anorganischen Füllstoff in ein Gemisch aus optisch aktiven polymerisierbaren Verbindungen, einem Vernetzungsmittel und einem Verdünnungsmittel suspendiert, die erhaltene Mischung mit einem Radikalbildner aktiviert und in einem wäßrigen Medium unter Verwendung eines Schutzkolloids dispergiert und anschließend die erhaltene Dispersion durch Erhitzen auf die Zerfallstemperatur des Radikalbildners polymerisiert.

9. Verwendung von Perlpolymerisaten gemäß Ansprüchen 1 bis 7 zur chromatographischen Trennung von Enantiomerengemischen in ihre Enantiomeren.

## Claims

1. Optically active crosslinked bead polymers having an average particle diameter of 1 - 800 micrometres, characterised in that they contain an amount of 2 - 60 per cent by weight of inorganic filler with a specific surface area of 30 - 500 $m^2/g$.

2. Optically active crosslinked bead polymers according to Claim 1, which contain an amount of 5 to 30% by weight of inorganic filler.

3. Bead polymers according to Claim 1, characterised in that as inorganic filler they contain insoluble crystalline or amorphous, inorganic compounds having an average particle size of 3 nm to 10 µm.

4. Bead polymers according to Claims 1 to 3, characterised in that the inorganic filler comprises hydroxides, oxides, carbonates, sulphates, phosphates or silicates of metals, silicas or finely ground glasses and glass ceramics.

5. Bead polymers according to Claims 1 to 4, characterised in that they contain inorganic fillers which have been treated with adhesion promoters from the silane and/or titanium compounds group.

6. Bead polymers according to Claims 1 to 5, characterised in that they contain polymerisable derivatives of optically active amines, amino alcohols, amino acid esters or amino acid amides.

7. Bead polymers according to Claims 1 to 6, characterised in that they contain 30 to 95% by weight (relative to the weight of the bead polymers) polymer content of identical or different polymerisable compounds.

8. Method for the preparation of optically active crosslinked bead polymers according to Claim 1, characterised in that the inorganic filler, if appropriate treated with adhesion promoters, is suspended in a mixture of optically active polymerisable compounds, a crosslinking agent and a diluent, the mixture obtained is activated with a free-radical promoter and dispersed in an aqueous medium using a protective colloid and the dispersion obtained is then polymerised by heating to the decomposition temperature of the free-radical promoter.

9. Use of bead polymers according to Claims 1 to 7 for the chromatographic resolution of enantiomer mixtures into their enantiomers.

**Revendications**

1. Produits de polymérisation en perles réticulés optiquement actifs ayant un diamètre moyen de particules de 1 à 800 micromètres, caractérisés en ce qu'ils contiennent une proportion de 2 à 60 % en poids de charge inorganique ayant une surface spécifique de 30 à 500 $m^2$/g.

2. Produits de polymérisation en perles réticulés optiquement actifs suivant la revendication 1, qui contiennent une proportion de charge inorganique de 5 à 30 % en poids.

3. Produits de polymérisation en perles suivant la revendication 1, caractérisés en ce qu'ils contiennent comme charges inorganiques des composés inorganiques insolubles cristallins ou amorphes ayant un diamètre moyen de particules de 3 nm à 10 µm.

4. Produits de polymérisation en perles suivant les revendications 1 à 3, caractérisés en ce que la charge inorganique est constituée d'hydroxydes, d'oxydes, de carbonates, de sulfates, de phosphates ou de silicates de métaux, de dioxydes de silicium ou de verres et céramiques vitreuses finement broyés.

5. Produits de polymérisation en perles suivant la revendication 1 à 4, caractérisés en ce qu'ils contiennent des charges inorganiques qui ont été traitées avec des adhésifs du groupe des silanes et/ou de composés de titane.

6. Produits de polymérisation en perles suivant les revendications 1 à 5, caractérisés en ce qu'ils contiennent des dérivés polymérisables d'amines, d'amino-alcools, d'esters d'amino-acides ou d'amides d'amino-acides optiquement actifs.

7. Produits de polymérisation en perles suivant les revendications 1 à 6, caractérisés en ce qu'ils contiennent 30 à 95 % en poids (par rapport au poids de ces produits) d'une fraction polymérique de composés polymérisables identiques ou différents.

8. Procédé d'obtention de produits de polymérisation en perles réticulés optiquement actifs suivant la revendication 1, caractérisé en ce qu'on met en suspension la charge inorganique éventuellement traitée avec des adhésifs dans un mélange de composés polymérisables optiquement actifs, d'un agent de réticulation et d'un diluant, on active le mélange obtenu avec un générateur de radicaux et on le disperse dans un milieu aqueux en utilisant un colloïde protecteur, puis on polymérise la dispersion obtenue par chauffage à la température de décomposition du générateur de radicaux.

9. Utilisation de produits de polymérisation en perles suivant les revendications 1 à 7 pour la séparation chromatographique de mélanges d'énantiomères en les énantiomères de ces mélanges.